# DEMANDE DE BREVET EUROPEEN

(11) **EP 1 400 385 A1**
(43) Date de publication de la demande: **24.03.2004**
(21) Numéro de dépôt: 03364018.6
(22) Date de dépôt: 18.09.2003
(51) Int. Cl.: B60J 5/10, B60R 5/04

(54) **Dispositif cache-bagages pour véhicule automobile à hayon arriére, à commande automatique, et véhicule automobile correspondant**

(30) Priorité: 18.09.2002 FR 0211580
(71) Demandeur: WAGON AUTOMOTIVE SNC, 79302 Bressuire Cédex (FR)
(72) Inventeur: Jeuffray, Jean-Marie, 79300 Noirlieu (FR)
(74) Mandataire: Vidon, Patrice

(57) **Abrégé**

Dispositif cache-bagages pour véhicule automobile présentant un hayon (11) arrière, comprenant un rideau d'occultation (14) mobile entre au moins deux positions, une position repliée, dans laquelle il est essentiellement logé dans un logement prévu à cet effet dans ledit hayon (11); et une position déployée, dans laquelle il s'étend sensiblement horizontalement depuis ledit hayon (11), au dessus d'un espace destiné à recevoir des bagages, et des moyens de commande (140) dudit dispositif, assurant le passage de ladite position déployée à ladite position repliée, ou repliement, actionnés par des moyens d'ouverture (130) dudit hayon.

## Description

Dispositif cache-bagages pour véhicule automobile à hayon arrière, à commande automatique, et véhicule automobile correspondant.

Le domaine de l'invention est celui des véhicules automobiles, et en particulier des véhicules automobiles munis d'un hayon arrière, monté sur la carrosserie dudit véhicule. L'invention concerne ainsi notamment les véhicules de type « monospace » ou « break », ayant un hayon arrière articulé au voisinage du pavillon du véhicule, selon un axe horizontal perpendiculaire à l'axe de roulage du véhicule.

Ces hayons permettent de libérer ou d'occulter l'accès à un espace destiné à recevoir des bagages (on englobe bien sûr sous ce terme les bagages au sens strict, mais également tout colis, objet, produit,... susceptible d'être transporté dans un véhicule). Cet espace est généralement défini par le dossier de la banquette arrière du véhicule, les bords latéraux du véhicule et le hayon en position fermée.

Depuis longtemps, on recouvre cet espace par une tablette amovible, qui permet notamment de cacher le contenu de cet espace de stockage de bagages. On a également proposé des rideaux cache-bagages, montés sur des tubes à enrouleur, et que l'on peut déployer au-dessus de cet espace.

Cette technique est relativement efficace, et esthétique. Cependant, elle présente des inconvénients.

Le boîtier du store, comprenant le tube enrouleur, est monté sur le dossier de la banquette arrière. Il forme donc une excroissance, qui peut être très gênante lorsque la banquette est repliée. Dans ce cas en effet, le dossier doit être dans le prolongement du plancher, et former une grande surface plane, adaptée pour recevoir des bagages encombrants.

Il est en outre souhaitable que ces rideaux soient relativement solides, et suffisamment rigides, par exemple pour que l'on puisse y déposer un vêtement ou de petits objets. A tout le moins, malgré leur largeur relativement importante, ces rideaux doivent rester sensiblement plans. On utilisera donc des baleines, ou d'autres moyens de renfort, qui nécessitent un espace de rangement important, dans le dossier ou à son voisinage. Cela entraîne une perte en espace utile de stockage pour les bagages.

Par ailleurs, les stores connus de ce type sont manuels, et l'utilisateur doit effectuer des manipulations à chaque ouverture du hayon (ouverture du hayon, repliement du rideau, manipulation des bagages, déploiement du rideau, fermeture du hayon...). Cela est peu acceptable, notamment dans certains véhicules haut de gamme, et conduit souvent à une non utilisation du rideau, qui reste en position repliée.

L'invention a notamment pour objectif de pallier ces inconvénients de l'art antérieur.

Plus précisément, un objectif de l'invention est de fournir un dispositif cache-bagages à rideau d'occultation mobile, pour véhicule à hayon arrière, qui ne perturbe pas la planéité du plancher, lorsque la banquette arrière est repliée.

Un autre objectif de l'invention est de fournir un tel dispositif cache-bagages, qui ne réduise pas, ou très peu, l'espace utile disponible pour stocker des bagages.

Encore un autre objectif de l'invention est de fournir un tel dispositif cache-bagages, qui définisse en position déployée une surface horizontale restant sensiblement plane.

L'invention a également pour objectif de fournir un tel dispositif cache-bagages, qui réduise ou supprime les manipulations que doit faire un utilisateur voulant accéder à l'espace destiné à recevoir des bagages.

Un autre objectif de l'invention est de fournir un tel dispositif cache-bagages, qui soit relativement peu coûteux à fabriquer, à installer et à mettre en oeuvre.

Encore un autre objectif de l'invention est de fournir un tel dispositif cache-bagages, qui soit adapté aux exigences des constructeurs automobiles, notamment en termes de tolérance aux jeux.

Ces objectifs, ainsi que d'autres qui apparaîtront par la suite, sont atteints à l'aide d'un dispositif cache-bagages pour véhicule automobile présentant un hayon arrière, ledit dispositif comprenant un rideau d'occultation mobile entre au moins deux positions :
- une position repliée, dans laquelle il est essentiellement logé dans un logement prévu à cet effet dans ledit hayon ; et
- une position déployée, dans laquelle il s'étend sensiblement horizontalement depuis ledit hayon, au dessus d'un espace destiné à recevoir des bagages.

Selon l'invention, ce dispositif comprend des moyens de commande dudit dispositif, assurant le passage de ladite position déployée à ladite position repliée, ou repliement, actionnés par des moyens d'ouverture dudit hayon.

Ainsi, la mise en oeuvre du cache-bagages est automatisée, l'utilisateur n'ayant pas à replier (ni même à commander cette opération), lorsqu'il ouvre le hayon.

En outre, le hayon replié n'encombre pas l'espace disponible, et notamment le dos du siège arrière du véhicule.

De façon avantageuse, lesdits moyens de commande assurent également le passage de ladite position repliée à ladite position déployée, ou déploiement, lorsque ledit hayon est refermé.

On dispose ainsi d'un système complètement automatisé. On peut bien sûr également prévoir, à titre d'alternatives et/ou de complément des commandes manuelles, permettant d'agir sur l'ouverture ou la fermeture (éventuellement partielles) du cache-bagages.

Selon un mode de réalisation préférentiel, ledit reploiement est assuré par des moyens de rappel, agissant sur un tube d'enroulement dudit rideau d'occultation. Il s'agit par exemple d'au moins un ressort.

Ces moyens de rappel sont alors dimensionnés pour permettre un repliement suffisamment rapide (par rapport à l'ouverture du hayon).

Préférentiellement, le dispositif comprend des moyens de motorisation agissant sur ledit rideau d'occultation. Ces derniers peuvent notamment permettre ledit déploiement, ainsi que le repliement (en complément ou en remplacement des moyens de rappel).

De façon avantageuse, selon un mode de réalisation, lesdits moyens de motorisation sont montés dans ledit hayon.

Préférentiellement, ledit rideau d'occultation présente au moins une baleine s'étendant parallèlement audit hayon, et/ou une série de lamelles, permettant d'obtenir une certaine rigidité et solidité.

Selon un mode de réalisation, l'extrémité libre dudit rideau d'occultation présente une barre de tirage, dont les extrémités circulent dans des rails montés sur ledit véhicule.

De façon avantageuse, ledit logement comprend un tube d'enroulement et au moins un rouleau de guidage, assurant le guidage de ladite toile à l'intérieur dudit logement.

Le dispositif peut notamment comprendre deux rouleaux de guidage montés éloignés l'un de l'autre respectivement en partie supérieure et en partie inférieure dudit logement. Avantageusement, ledit tube d'enroulement est monté au voisinage dudit rouleau de guidage monté en partie supérieure.

Préférentiellement, la somme de la distance entre ledit tube d'enroulement et ledit rouleau monté en partie inférieure et de la distance entre ledit rouleau monté en partie inférieure et ledit rouleau monté en partie supérieure est sensiblement égale à la distance sur laquelle s'étend ledit espace destiné à recevoir des bagages.

Il est ainsi aisé de stocker la toile, même lorsqu'elle est équipée (ou formée) de baleines et/ou de lamelles.

De façon avantageuse, ladite toile présente une portion couvrante, correspondant à la surface s'étendant au dessus dudit espace destiné à recevoir des bagages, et une portion d'enroulement, s'enroulant autour d'un tube d'enroulement dans ladite position repliée.

Dans ce cas, préférentiellement, seule ladite portion couvrante est munie de baleines et/ou présente des lamelles.

Selon un autre aspect préférentiel de l'invention, le dispositif cache-bagages comprend des moyens de centrage, pour compenser d'éventuels écarts de construction du véhicule, dans au moins une direction.

De façon avantageuse, les moyens d'ouverture dudit hayon agissent sur un contacteur électrique commandant le repliement dudit rideau d'occultation.

De même, les moyens de verrouillage dudit hayon agissent avantageusement sur un contacteur commandant le déploiement dudit rideau d'occultation.

Selon un mode de réalisation de l'invention, lesdits moyens de motorisation agissent sur des moyens mécaniques poussant ladite toile d'occultation.

Selon un autre mode de réalisation, lesdits moyens de motorisation agissent sur des moyens d'entraînement de l'extrémité libre dudit rideau d'occultation.

Dans ce cas, lesdits moyens comprennent avantageusement au moins un chariot, coopérant avec une barre de tirage montée sur ladite extrémité libre, et au moins un câble d'entraînement solidarisé audit chariot et entraîné par lesdits moyens de motorisation.

Préférentiellement, le ou lesdits chariots peuvent prendre deux positions, une position d'accrochage dans laquelle ils peuvent entraîner ladite barre de tirage, et une position de libération, dans laquelle ladite barre de tirage est désolidarisé du ou desdits chariots.

Notamment, ledit chariot peut être monté basculant.

De façon avantageuse, dans ladite position repliée, le ou lesdits chariots sont dans la position de libération, prêt à recevoir la barre de tirage lors ledit hayon sera replié.

Selon un mode de mise en oeuvre, le dispositif comprend deux chariots, agissant sur chaque extrémité de ladite barre de tirage, et actionnés chacun par un moteur.

L'invention concerne également les véhicules automobiles comprenant un dispositif cache-bagages tel que décrit ci-dessus.

D'autres caractéristiques et avantages de l'invention apparaîtront plus clairement à la lecture de la description suivante de deux modes de réalisation préférentiels de l'invention, donnés à titre de simples exemples illustratifs et non limitatifs, et des dessins annexés, parmi lesquelles :
- la figure 1 illustre, de façon schématique, l'arrière d'un véhicule automobile équipé d'un premier mode de réalisation d'un dispositif cache-bagages selon l'invention ;
- la figure 2 présente le dispositif cache-bagages équipant le véhicule de la figure 1, dans une position partiellement déployée ;
- la figure 3 est une vue en coupe des moyens de guidage de la barre de tirage du dispositif de la figure 2 ;
- la figure 4 présente, de façon schématique, l'arrière d'un véhicule automobile équipé d'un second mode de réalisation d'un dispositif cache-bagages selon l'invention ;
- la figure 5 est une vue partielle du dispositif cache-bagages du véhicule de la figure 4, en cours de déploiement ;
- les figures 6A et 6B présentent le fonctionnement du chariot de la figure 5, respectivement en position d'attente de la fermeture du hayon et en position de maintien de la barre de tirage ;
- la figure 7 est une vue en coupe de moyens de guidage et des moyens de motorisation du chariot des figures 4 à 6B.

L'invention concerne donc un dispositif cache-bagages automatique, pour un véhicule équipé d'un hayon.

Selon l'invention, le terme « automatique » signifie que le rideau cache-bagages se replie automatiquement, lorsque l'utilisateur ouvre le hayon. Avantageusement, le déploiement de la toile est également assuré de façon automatique, dès que le hayon est refermé. Des moyens de commande (par exemple des contacteurs électriques ou des moyens mécaniques, activés ou actionnés par la poignée d'ouverture du hayon et/ou sa serrure) agissent sur les moyens d'entraînement du store (moteur et/ou ressort, par exemple). Les moyens d'entraînement du store, ainsi que le store lui-même en position repliée, sont logés dans le hayon.

La mise en oeuvre du store peut être légèrement différente, et/ou complétée. On peut ainsi prévoir une commande ouvrant et/ou fermant partiellement le store lors de l'ouverture d'une vitre du hayon, ou pour accéder à un bagage depuis l'intérieur du véhicule, sans avoir à ouvrir le hayon.

En outre, on peut prévoir des moyens permettant d'invalider cette fonction (pour que le store reste en permanence ouvert).

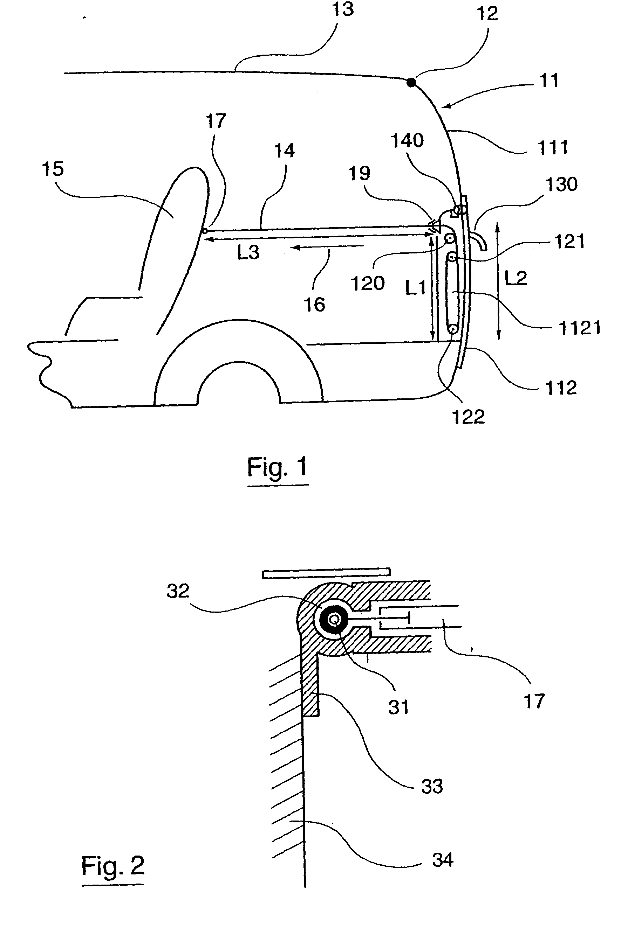

La figure 1 illustre un premier mode de réalisation de l'invention, de façon schématique.

On reconnaît, sur cette figure, une représentation schématique de l'arrière d'un véhicule de type « monospace », présentant un hayon 11, articulé selon un axe 12 s'étendant au voisinage du pavillon 13. L'invention peut s'appliquer, plus généralement, à tout type de véhicule dans lequel on peut mettre en oeuvre un tel dispositif, et par exemple les véhicules de type break.

Le hayon comprend, classiquement, une partie supérieure vitrée 111 et une partie inférieure pleine 112, à l'intérieur de laquelle on a défini, selon l'invention, un logement 1121, pouvant recevoir la toile du cache-bagages repliée et ses moyens de motorisation.

La toile du store cache-bagages 14 est donc conçue pour se déplier depuis le hayon jusqu'au dos de la banquette arrière 15 du véhicule, selon la flèche 16. L'extrémité de la toile 14 est munie d'une barre de tirage 17.. En position repliée, la barre de tirage 17 vient en butée avec un élément 19 dont la fonction est précisée plus en détail par la suite.

Dans le logement 1121, on a prévu trois rouleaux 120, 121 et 122, s'étendant parallèlement au store 14, de façon à assurer son guidage.

Le rouleau terminal 121 est un tube enrouleur classique, muni de moyens de rappel 21 (figure 2), de structure connue en soi. Dans le cas où ces moyens de rappel comprennent un ressort, il sera configuré en tenant compte de la longueur et de la structure du store, et ddu fait que ce dernier doit se replier très rapidement lorsque le hayon est ouvert. Le rappel peut également être assuré par les moyens de motorisation.

Le rouleau 120 forme un revoi d'angle permettant de faire passer la toile, d'une position horizontale lorsqu'elle est déployée vers une position sensiblement verticale à l'intérieur du logement 1121. La barre de tirage reste quant à elle dans la partie horizontale, et son entraînement est assuré par exemple par deux câbles crémaillère (non représentés) qui poussent deux chariots dans les rails de guidage. On pourrait également prévoir que ce rouleau 120 estmotorisé de façon à permettre le déploiement de la toile 14. Ce déploiement serait alors effectué en mode « push », le rouleau 120 poussant la toile, et/ou la barre de tirage 17, vers le dossier du siège arrière 15.

Le rideau cache-bagages 14 doit bien sûr avoir une certaine rigidité, qui peut par exemple être obtenue en réalisant ce rideau sous la forme d'une série de lamelles 22 parallèles à la barre de tirage 17, réalisées en profilé. Il peut également s'agir d'un tissu équipé de baleines s'étendant également parallèlement à la barre de tirage 17.

Dans les deux cas, qu'il s'agisse de lamelles ou de baleines, on comprend qu'il est peu aisé d'enrouler la toile autour du tube enrouleur 121. Pour cette raison, on a prévu un tube de guidage 122, placé en position éloignée du tube 120, au bas du logement 1121.

L'écartement entre les différents rouleaux est choisi de façon que la somme des distances L1 entre le tube 121 et le tube 122 d'une part, et L2 d'autre part entre le tube 120 et le tube 122, soit au moins égale à la distance L3 sur laquelle le store 14 doit être déployé. Ainsi, lorsque le store est replié, la portion munie de baleines ou de lamelles est située dans le logement, mais non autour du tube enrouleur 121. Autour de celui-ci n'est présente qu'une toile classique qui se déroule à l'intérieur du logement lorsque le store est déployé.

Le rouleau 122 peut également être mobile en Z (verticalement) et muni d'un système le ramenant vers le bas, ce qui permet d'aider la rentrée de la toile.

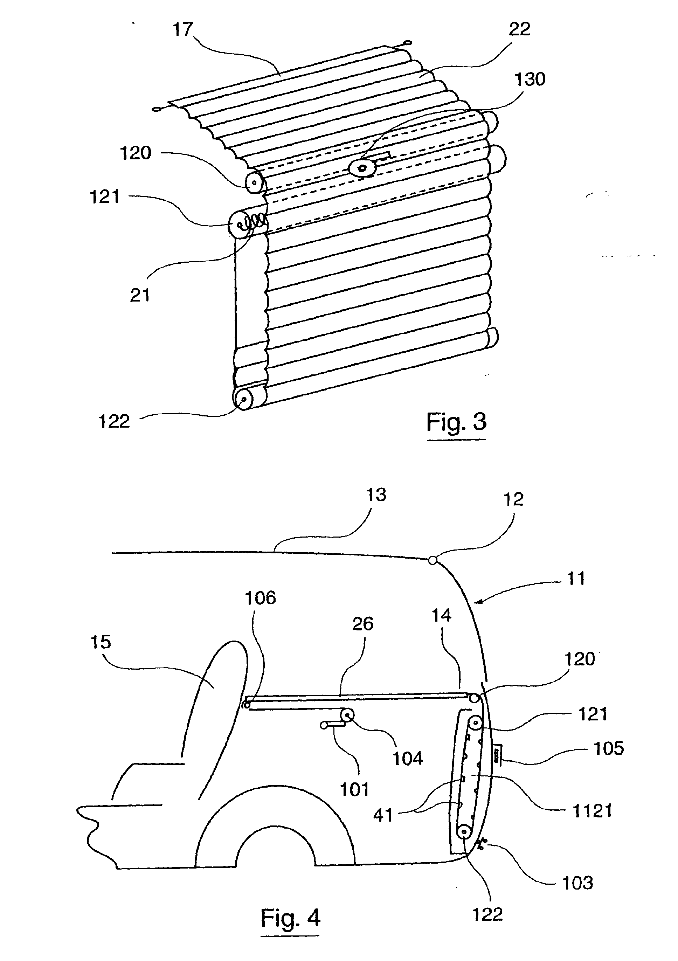

Ainsi que cela apparaît sur la figure 3, qui est une vue en coupe partielle, la barre de tirage (ou le cas échéant les baleines, ou les lamelles, ou au moins certaines d'entre elles) présente à ses extrémités des éléments de guidage 31, circulant dans des logements 32, formés dans un profilé 33, fixés au flanc 34 du véhicule.

Préférentiellement, pour pallier les écarts de construction entre différents véhicules, et/ou les écarts de largeur de l'intérieur du véhicule sur la zone de déploiement du store 14, les moyens 31 sont mobiles en translation à l'intérieur de la barre de tirage 17, ce qui permet à cette dernière de s'éloigner ou de s'approcher de l'extrémité 31.

Selon l'invention, la poignée 130 d'ouverture du hayon agit sur des moyens de commande, ici un contacteur électrique, qui contrôlent le repliement du store 14. Plus précisément, lorsqu'un utilisateur agit sur la poignée 130 pour ouvrir le hayon, cela actionne simultanément le moteur 140, qui se met aussitôt en action pour replier la toile 14, via le rouleau 120. Ce repliement est également assisté par le tube enrouleur 121, et ses moyens de rappel 21.

Lorsque l'utilisateur referme le hayon, le fonctionnement est symétrique. Le retour de la poignée 130 dans sa position de verrouillage, et/ou le contact avec les moyens de verrouillage eux-mêmes, entraîne la mise en action du moteur 140 dans l'autre sens, pour assurer le déploiement automatique du store 14.

Bien sûr, différents moyens peuvent être prévus pour assurer une tolérance suffisante des écarts de largeur dus à la caisse, et du centrage de la fermeture.

L'objectif est de faire en sorte que les chariots (liés aux rails) et les embouts de la barre de tirage (liés au hayon, lorsqu'il est ouvert) soient correctement alignés lors de la fermeture du hayon. Ces moyens de centrage doivent prendre en compte les éventuels défauts de tolérance, et donc rattraper des écarts en Z (vertical) et en Y (transversal).

En Y, on peut ainsi prévoir que les embouts de barre de tirage peuvent coulisser à l'intérieur de celle-ci, de façon à permettre une variation de la distance entre eux. En Z, on peut mettre en oeuvre une forme en « entonoir », le rail étant « libre. On peut aussi utiliser un système conique femelle sur les rails et mâle sur le hayon, avec des rails légèrement mobiles.

La figure 4 illustre un second mode de réalisation de l'invention, selon lequel le déploiement de la toile 14 (équipée, dans ce mode de réalisation, de baleines 41) est assuré par deux moteurs 101, logés respectivement de part et d'autre du véhicule, et qui agissent sur un câble lisse 102.

La structure générale du dispositif, et notamment les moyens d'entraînement montés à l'intérieur du logement 1121, sont similaires à ceux qui sont décrits précédemment, en relation avec la figure 1, et ne sont donc pas à nouveau décrits ici.

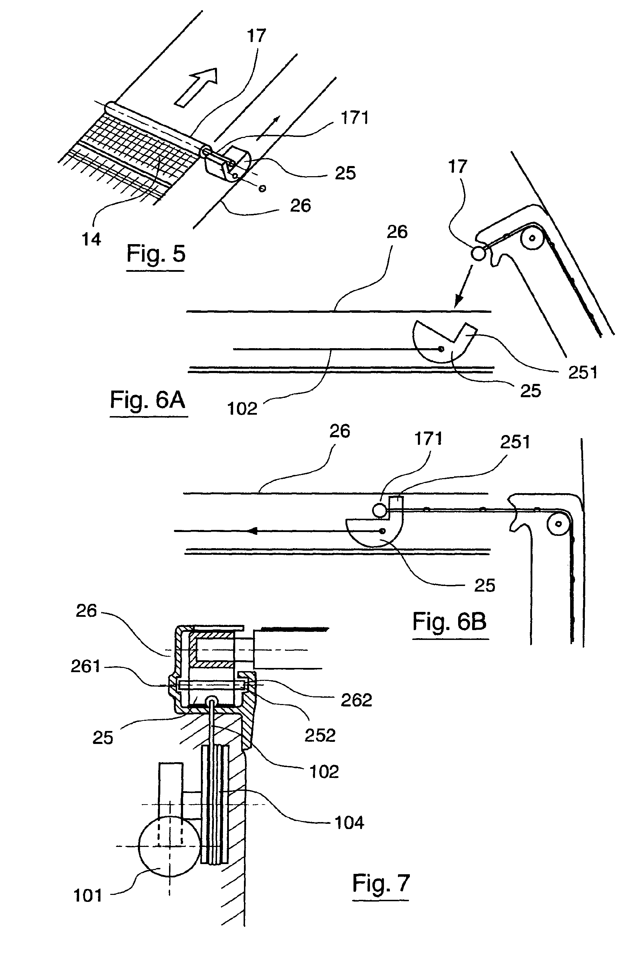

Selon ce mode de réalisation, et ainsi que cela est illustré en figure 5, qui présente une vue partielle de l'extrémité de la toile 14 et de sa barre de tirage 17, le déploiement est assuré à l'aide de deux chariots 25, circulant dans des rails 26 montés de chaque côté du véhicule. Les deux extrémités latérales 171 de la barre de tirage sont conçues pour venir prendre appui sur ce chariot 25.

Ainsi que cela apparaît sur les figures 6A et 6B, ce chariot est relié au câble 102, de façon que son déplacement dans le rail 26 soit assuré par l'intermédiaire du moteur 101. Ce chariot est en outre basculant entre les deux positions illustrées respectivement sur les figures 6A et 6B.

On décrit maintenant plus en détail la cinématique de ce dispositif.

Lorsque le hayon est ouvert (la toile étant donc repliée à l'intérieur du logement 1121), le chariot est ramené, le long du rail 26, vers l'extrémité arrière du véhicule. Il prend alors la position basculée illustrée en figure 6A, dans laquelle il est prêt à recevoir la barre de tirage 17, qui se trouve en butée le long du hayon.

Dès que le hayon est refermé, ce qui peut être détecté par un contact électrique 103 au niveau des moyens de verrouillage du hayon, le moteur 101 entre en action pour entraîner le câble 102. Cette mise en tension entraîne tout d'abord le redressement du chariot 25, de façon que la butée 251 accroche la barre de tirage 17, et plus précisément son extrémité 171, ainsi que cela est illustré sur la figure 6B. Ensuite, le câble 102 s'enroule progressivement autour de la poulie 104, et le chariot se déplace à l'intérieur du rail 26, assurant le déploiement du store 14.

Lorsque le store 14 est complètement déployé, le chariot s'arrête et maintient la barre de tirage 17 de façon que la toile reste en position.

Lorsque l'utilisateur ouvre le hayon, en agissant sur la poignée 105, cela provoque automatiquement, via une commande électrique, le basculement du chariot 25, qui libère la barre de tirage. Sous l'action des moyens de rappel équipant le tube enrouleur 120, la toile se replie alors à l'intérieur du logement 1121, pour reprendre sa position illustrée en figure 6A.

La figure 7 illustre en coupe les moyens d'entraînement et de guidage du chariot 25. Le rail 26 est réalisé sous la forme d'un profilé, à l'intérieur duquel circule le chariot 25. Un axe 252 est prévu sur ce chariot, de façon à permettre son guidage, et son basculement aux endroits voulus. Le rail 26 présente des logements 261, 262 prévus pour recevoir cet axe 252.

Le câble 102 circule à l'intérieur de ce rail 26, puis rejoint la poulie 104 d'enroulement et de déroulement du câble, via une poulie 106 de guidage, placée à proximité du siège arrière 15, permettant un retour à 180° de ce câble. Le moteur 101 agit directement sur la poulie d'entraînement 104.

Bien que dans le mode de réalisation décrit, on a prévu deux moteurs, un de chaque côté, on peut bien sûr prévoir un unique moteur, et des moyens d'entraînement et de guidage des deux câbles adaptés en conséquence.

L'invention ne se limite bien sûr pas aux deux modes de réalisation décrits ci-dessus, mais englobe également tout autre mode de réalisation, dès lors que le repliement et/ou le déploiement de la toile est assuré de façon automatique, à partir de capteurs équipant les moyens de verrouillage du hayon, et/ou les moyens de commande de ceux-ci.

A titre d'exemple, on peut prévoir des baleines désolidarisables, selon le principe décrit dans le document du brevet FR-2805496, ces baleines venant se loger dans le hayon lors du repliement.

## Revendications

1. Dispositif cache-bagages pour véhicule automobile présentant un hayon arrière, ledit dispositif comprenant un rideau d'occultation mobile entre au moins deux positions :
- une position repliée, dans laquelle il est essentiellement logé dans un logement prévu à cet effet dans ledit hayon ; et
- une position déployée, dans laquelle il s'étend sensiblement horizontalement depuis ledit hayon, au dessus d'un espace destiné à recevoir des bagages,
**caractérisé en ce qu'**il comprend des moyens de commande dudit dispositif, assurant le passage de ladite position déployée à ladite position repliée, ou repliement, actionnés par des moyens d'ouverture dudit hayon.

2. Dispositif cache-bagages selon la revendication 1, **caractérisé en ce que** lesdits moyens de commande assurent également le passage de ladite position repliée à ladite position déployée, ou déploiement, lorsque ledit hayon est refermé.

3. Dispositif cache-bagages selon l'une quelconque des revendications 1 et 2, **caractérisé en ce que** ledit reploiement est assuré par des moyens de rappel, agissant sur un tube d'enroulement dudit rideau d'occultation.

4. Dispositif cache-bagages selon la revendication 3, **caractérisé en ce que** lesdits moyens de rappel comprennent au moins un ressort.

5. Dispositif cache-bagages selon l'une quelconque des revendications 1 à 4, **caractérisé en ce qu'**il comprend des moyens de motorisation agissant sur ledit rideau d'occultation.

6. Dispositif cache-bagages selon la revendication 5, **caractérisé en ce que** lesdits moyens de motorisation permettent ledit déploiement.

7. Dispositif cache-bagages selon l'une quelconque des revendications 5 et 6, **caractérisé en ce que** lesdits moyens de motorisation sont montés dans ledit hayon.

8. Dispositif cache-bagages selon l'une quelconque des revendications 1 à 7, **caractérisé en ce que** ledit rideau d'occultation présente au moins une baleine s'étendant parallèlement audit hayon.

9. Dispositif cache-bagages selon l'une quelconque des revendications 1 à 3, **caractérisé en ce que** ledit rideau d'occultation présente une série de lamelles.

10. Dispositif cache-bagages selon l'une quelconque des revendications 1 à 9, **caractérisé en ce que** l'extrémité libre dudit rideau d'occultation présente une barre de tirage, dont les extrémités circulent dans des rails montés sur ledit véhicule.

11. Dispositif cache-bagages selon l'une quelconque des revendications 1 à 10, **caractérisé en ce que** ledit logement comprend un tube d'enroulement et au moins un rouleau de guidage, assurant le guidage de ladite toile à l'intérieur dudit logement.

12. Dispositif cache-bagages selon la revendication 11, **caractérisé en ce qu'**il comprend deux rouleaux de guidage montés éloignés l'un de l'autre respectivement en partie supérieure et en partie inférieure dudit logement.

13. Dispositif cache-bagages selon les revendications 11 et 12, **caractérisé en ce que** ledit tube d'enroulement est monté au voisinage dudit rouleau de guidage monté en partie supérieure.

14. Dispositif cache-bagages selon la revendication 12 ou 13, **caractérisé en ce que** la somme de la distance entre ledit tube d'enroulement et ledit rouleau monté en partie inférieure et de la distance entre ledit rouleau monté en partie inférieure et ledit rouleau monté en partie supérieure est sensiblement égale à la distance sur laquelle s'étend ledit espace destiné à recevoir des bagages.

15. Dispositif cache-bagages selon l'une quelconque des revendications 1 à 14, **caractérisé en ce que** ladite toile présente une portion couvrante, correspondant à la surface s'étendant au dessus dudit espace destiné à recevoir des bagages, et une portion d'enroulement, s'enroulant autour d'un tube d'enroulement dans ladite position repliée.

16. Dispositif cache-bagages selon les revendications 15 et 8, **caractérisé en ce que** seule ladite portion couvrante est munie de baleines.

17. Dispositif cache-bagages selon les revendications 15 et 9, **caractérisé en ce que** seule ladite portion couvrante présente des lamelles.

18. Dispositif cache-bagages selon l'une quelconque des revendications 1 à 17, **caractérisé en ce qu'**il comprend des moyens de centrage, pour compenser d'éventuels écarts de construction du véhicule, dans au moins une direction.

19. Dispositif cache-bagages selon l'une quelconque des revendications 5 à 18, **caractérisé en ce que** les moyens d'ouverture dudit hayon agissent sur un contacteur électrique commandant le repliement dudit rideau d'occultation.

20. Dispositif cache-bagages selon l'une quelconque des revendications 6 à 19, **caractérisé en ce que** les moyens de verrouillage dudit hayon agissent sur un contacteur commandant le déploiement dudit rideau d'occultation.

21. Dispositif cache-bagages selon l'une quelconque des revendications 6 à 20, **caractérisé en ce que** lesdits moyens de motorisation agissent sur des moyens mécaniques poussant ladite toile d'occultation.

22. Dispositif cache-bagages selon l'une quelconque des revendications 6 à 20, **caractérisé en ce que** lesdits moyens de motorisation agissent sur des moyens d'entraînement de l'extrémité libre dudit rideau d'occultation.

23. Dispositif cache-bagages selon la revendication 22, **caractérisé en ce que** lesdits moyens comprennent au moins un chariot, coopérant avec une barre de tirage montée sur ladite extrémité libre, et au moins un câble d'entraînement solidarisé audit chariot et entraîné par lesdits moyens de motorisation.

24. Dispositif cache-bagages selon la revendication 23, **caractérisé en ce que** le ou lesdits chariots peuvent prendre deux positions, une position d'accrochage dans laquelle ils peuvent entraîner ladite barre de tirage, et une position de libération, dans laquelle ladite barre de tirage est désolidarisé du ou desdits chariots.

25. Dispositif cache-bagages selon la revendication 24, **caractérisé en ce que** ledit chariot est monté basculant.

26. Dispositif cache-bagages selon l'une quelconque des revendications 24 et 25, **caractérisé en ce que**, dans ladite position repliée, le ou lesdits chariots sont dans la position de libération, prêt à recevoir la barre de tirage lors ledit hayon sera replié.

27. Dispositif cache-bagages selon l'une quelconque des revendications 24 à 26, **caractérisé en ce qu'**il comprend deux chariots, agissant sur chaque extrémité de ladite barre de tirage, et actionnés chacun par un moteur.

28. Véhicule automobile comprenant un dispositif cache-bagages selon l'une quelconque des revendications 1 à 27.
